Europäisches Patentamt

European Patent Office

Office européen des brevets

(19)

(11) **EP 1 153 332 B1**

(12) **EUROPEAN PATENT SPECIFICATION**

(45) Date of publication and mention
of the grant of the patent:
**16.04.2003 Bulletin 2003/16**

(21) Application number: **00903906.6**

(22) Date of filing: **18.02.2000**

(51) Int Cl.[7]: **G02F 1/35**, H04B 10/18

(86) International application number:
**PCT/GB00/00605**

(87) International publication number:
**WO 00/049458 (24.08.2000 Gazette 2000/34)**

(54) **NON-LINEARITY COMPENSATION IN OPTICAL DEVICES AND TRANSMISSION SYSTEMS**

NICHTLINEARITÄTSKOMPENSIERUNG IN OPTISCHEN VORRICHTUNGEN UND UBERTRAGUNGSEINRICHTUNGEN

COMPENSATION DE NON-LINEARITE DANS DES DISPOSITIFS OPTIQUES ET DES SYSTEMES DE TRANSMISSION

(84) Designated Contracting States:
**AT BE CH CY DE DK ES FI FR GB GR IE IT LI LU MC NL PT SE**

(30) Priority: **19.02.1999 GB 9903882**

(43) Date of publication of application:
**14.11.2001 Bulletin 2001/46**

(73) Proprietor: **UNIVERSITY OF SOUTHAMPTON**
**Southampton, Hampshire SO17 1BJ (GB)**

(72) Inventors:
• **PAYNE, David, Neil**
**Hampshire SO3 5QG (GB)**
• **ALAM, Shaif-ul**
**Southampton, Hampshire SO16 3NY (GB)**
• **BURDGE, Geoffrey, Lynn**
**Maryland 21037 (US)**
• **GRUDININ, Anatoly Borisovich**
**Southampton, Hampshire SO16 7AL (GB)**

(74) Representative: **Haines, Miles John**
**D. Young & Co.**
**21 New Fetter Lane**
**London EC4A 1DA (GB)**

(56) References cited:
• PARE C ET AL: "Compensating for dispersion and the nonlinear Kerr effect without phase conjugation" OPTICS LETTERS, 1 APRIL 1996, OPT. SOC. AMERICA, USA, vol. 21, no. 7, pages 459-461, XP002139461 ISSN: 0146-9592

• PARE C ET AL: "Split compensation of dispersion and self-phase modulation in optical communication systems" OPTICS COMMUNICATIONS, 1 FEB. 1999, ELSEVIER, NETHERLANDS, vol. 160, no. 1-3, pages 130-138, XP002139462 ISSN: 0030-4018
• DESALVO R ET AL: "Self-focusing and self-defocusing by cascaded second-order effects in KTP" OPTICS LETTERS, 1 JAN. 1992, USA, vol. 17, no. 1, pages 28-30, XP002139463 ISSN: 0146-9592
• VIDAKOVIC P ET AL: "Large nonlinear phase shift owing to cascaded chi /sup (2)/ in quasi-phase-matched bulk LiNbO/sub 3/" OPTICS LETTERS, 1 MARCH 1997, OPT. SOC. AMERICA, USA, vol. 22, no. 5, pages 277-279, XP002139464 ISSN: 0146-9592 cited in the application
• SUNDHEIMER M L ET AL: "Large nonlinear phase modulation in quasi-phase-matched KTP waveguides as a result of cascaded second-order processes" OPTICS LETTERS, 1 SEPT. 1993, USA, vol. 18, no. 17, pages 1397-1399, XP002139465 ISSN: 0146-9592

- **FANG H ET AL: "Cascaded second-order nonlinearity in nonuniformly temperature tuned LiNbO/sub 3/ channel waveguide" CONFERENCE PROCEEDINGS. LEOS'98. 11TH ANNUAL MEETING. IEEE LASERS AND ELECTRO-OPTICS SOCIETY 1998 ANNUAL MEETING (CAT. NO.98CH36243), CONFERENCE PROCEEDINGS. LEOS'98. 11TH ANNUAL MEETING. IEEE LASERS AND ELECTRO-OPTICS SOCIETY 1998 ANNUAL MEETING, OR, pages 61-62 vol.2, XP002139467 1998, Piscataway, NJ, USA, IEEE, USA ISBN: 0-7803-4947-4**

- **ALAM S -U ET AL: "Cascaded nonlinearity: a simple technique to compensate Kerr effect in optical amplifiers" OFC/IOOC'99. OPTICAL FIBER COMMUNICATION CONFERENCE AND THE INTERNATIONAL CONFERENCE ON INTEGRATED OPTICS AND OPTICAL FIBER COMMUNICATIONS (CAT. NO.99CH36322), OFC/IOOC'99. OPTICAL FIBER COMMUNICATION CONFERENCE AND THE INTERNATIONAL CONFERENCE ON IN, pages 5-7 vol.3, XP002139466 1999, Piscataway, NJ, USA, IEEE, USA**

**Description**

## BACKGROUND OF THE INVENTION

The invention relates to compensation of optical non-linearities in optical devices and transmission systems, more especially, but not exclusively, to compensating for optical non-linearities that occur during optical amplification.

The unquestionable need for ultra-high bit rate transmission systems dictates the development of optical amplifiers of new generation capable of handling of picosecond optical pulses over the entire range of the third optical window. So far the main activity in this area has been concentrated on development of efficient amplifiers with low noise figures, flat gain curves and ultra-broad bandwidths (see, for example [1,2]).

However one topic has not been addressed adequately, namely the nonlinear distortion of Kerr non-linearity which can occur during pulse amplification in an optical amplifier.

The main impact of the Kerr non-linearity on transmission carriers is the effect of self-phase modulation (SPM) which results in spectral enrichment of the propagating pulses, i.e. degradation of the pulse from a signal transmission standpoint.

As is well known, the refractive index of any material consists of linear and nonlinear parts. On a fundamental level, the origin of the nonlinear response is related to the anharmonic motion of bound electrons under the applied field. Thus, the induced polarization **P** becomes a non-linear function of the applied field **E** and may be written as:

$$\mathbf{P} = \varepsilon_0(\chi^{(1)} \cdot \mathbf{E} + \chi^{(2)}:\mathbf{EE} + \chi^{(3)}\vdots\mathbf{EEE}) , \qquad (1)$$

where $\varepsilon_0$ is the vacuum permittivity and $\chi^{(1)}$ is the i-th order susceptibility. The linear susceptibility $\chi^{(1)}$ represents the main contribution to P. Its effects are included through the refractive index and attenuation coefficient. The second-order susceptibility accounts for second harmonic (SH) and sum-frequency generation which normally do not exist in optical fibers.

The lowest-order non-linearity in optical fibers originates from the third-order non-linearity and results in self-phase modulation (SPM), third-harmonic generation, four-wave mixing, and Raman and Brillouin scattering.

The existence of $\chi^{(3)}$ means that the medium (i.e. glass) has a refractive index which is proportional to the optical intensity $|E|^2$ and this otherwise small effect becomes noticeable at high illumination. Under intense illumination the refractive index can be represented as:

$$n(\omega,|E|^2) = n(\omega)+n_2|E|^2 \qquad (2)$$

where $n(\omega)$ is the linear part and $n_2$ is the non-linear coefficient related to $\chi^{(3)}$ by the expression:

$$n_2 = \frac{3}{8n}\mathrm{Re}(\chi^{(3)}) \qquad (3)$$

Here Re represents the real part and the optical field is assumed to be linearly polarized. In practice, however, very often the polarization is completely scrambled which reduces the effective non-linear refractive index. In silica $n_2$ is dominated by the electronic contribution, so to a good approximation the following expression holds (see [3]):

$$(n_2|E|^2)_{average} = \frac{5}{6}(n_2|E|^2)_{linear} \qquad (4)$$

The intensity-dependent refractive index leads to an intensity-dependent phase of the propagating wave, i.e.

$$\phi(t_t|E|^2) = knz = k(n_0 + n_2|E|^2)z = \phi_{hn} + \phi_{nl} \qquad (5)$$

where $k=2\pi/\lambda$ is the wave-number. In practical computations it is more convenient to use light intensity rather than electrical fields so that Equation (5) may be written in the form

$$\phi_{nl} = kn_2 Iz \qquad (6)$$

and we can define a nonlinear length $z_{nl}$ as

$$\phi_{nl} = kn_2 Iz_{nl} = 1 \qquad (7)$$

or

$$z_{nl} = (kn_2 I)^{-1} \qquad (8)$$

where I is the light intensity in $W/cm^2$ and $n_2 = 2.6 \cdot 10^{-16} cm^2/W$. Such a small value of the non-linear refractive index causes negligible changes in the value of the refractive index itself (even pulses with 100 kW peak power result in $\sim 4 \cdot 10^{-5}$ refractive index change which is approximately two orders of magnitude lower than the core-cladding refractive index difference).

The main effect caused by the non-linear refractive index is the generation of new spectral components due to self-phase modulation (SPM) i.e. spectral enrichment of the propagating pulses. This is because the non-linear phase given by Equation (6) incurs a time-dependent variation of the instantaneous frequency $\omega$ that can be written as

$$\omega = \omega_0 + \frac{\partial \phi_{nl}}{\partial t} = \omega_0 + kn_2 z \frac{\partial I}{\partial z} \qquad (9)$$

or

$$\omega - \omega_0 = kn_2 z \frac{\partial I}{\partial t} \qquad (10)$$

Thus the shorter the pulses and the higher their intensity the greater the spectral enrichment due to SPM. The most interesting and important consequence of SPM is not spectral broadening itself but nonlinear interaction of the spectral components in a pulse due to group velocity dispersion.

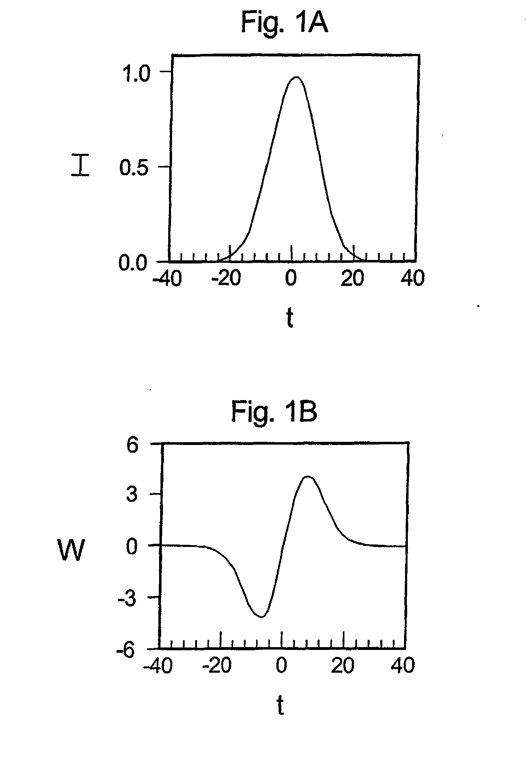

Figure 1A of the accompanying drawings shows an intensity profile of an optical pulse, as a function of time in arbitrary units, propagating down an optical fiber. SPM will tend to result in a frequency distribution of the pulse as illustrated in Figure 1B of the accompanying drawings.

Figure 1B illustrates how the lower frequency components of the pulse are gathered on the leading edge of the pulse, while higher frequency components of the pulse are mainly gathered at the trailing edge.

Spectral broadening results not only in temporal broadening due to chromatic dispersion, but also causes additional noise. SPM is proportional to the pulse intensity and the active length of the gain or amplification element, e.g. length of an erbium doped fiber amplifier (EDFA).

An obvious way to cope with SPM is to reduce either the pulse intensity or active length or both. For example, Richardson et al suggested the use of large mode area fibers [4] and Fermann [5] demonstrated advantages of selective excitation of multimode fibers.

However these approaches do not solve the problem of non-linearity, but merely avoid operating conditions in which the non-linearities occur in the amplifier element. The fundamental inherent problem of the non-linearities is thus not addressed by these prior art approaches. Neither of the suggested approaches is attractive, since in both cases gain and launch intensity must be limited, whereas high gain and/or high launch intensity are generally desirable.

## SUMMARY OF THE INVENTION

We suggest a radical approach to the problem. Namely, instead of minimizing SPM, we compensate SPM by exploiting a second order cascading non-linearity.

Cascading of two second order interactions in phase-mismatched second harmonic generation (SHG) resuits in accumulation of a nonlinear phase shift of the fundamental wave.

This phenomenon was predicted in the late 1960's. Using efficient high power sources this effect was studied further in the early 1990's, when high nonlinear phase shifts in quadratic media were experimentally demonstrated [6].

Paré et al [7,8] have suggested using non-linearity cascading to compensate for distortion in transmission lines caused by the Kerr effect and self-phase modulation, by amplifying a distorted signal and then passing it through a compensating element.

According to one aspect of the invention there is provided a method of compensating an optical non-linearity comprising:

(a) providing an optical signal;
(b) precompensating the optical signal for subsequent non-linear distortion in an active medium with a compensating medium which has a negative effective non-linear refractive index; and
(c) supplying the optical signal to the active medium with an intensity dependent positive non-linear refractive index.

According to another aspect of the invention there is provided a method of amplifying an optical signal comprising:

(a) providing an optical signal pulse having an input intensity;
(b) amplifying the optical signal pulse in a gain medium having an intensity dependent positive non-linear refractive index and which has a non-linear response at the input intensity, thereby to amplify the optical signal pulse; and
(c) compensating the optical signal pulse for distortion in the gain medium with a compensating medium which has a negative effective non-linear refractive index,

characterised in that the compensating occurs before the amplifying.

The non-linearity pre-compensation may form part of a transmitter or repeater. For optical fiber dispersion compensation, a pre-compensator can be kept sufficiently short that the role of dispersion is effectively negligible.

According to another aspect of the invention there is provided an optical device having an active medium with an intensity dependent positive non-linear refractive index and a compensating medium with a negative effective non-linear refractive index which is also intensity dependent, characterised in that the active medium is arranged after the compensating medium which serves as a pre-compensator.

According to another aspect of the invention there is provided an optical device having an active medium with an intensity dependent positive non-linear refractive index and a compensating medium with a negative effective non-linear refractive index which is also intensity dependent, further comprising a controller for controlling the compensating medium so as to satisfy an operating condition at which the negative effective non-linear refractive index of the compensating medium partially or wholly cancels the positive non-linear refractive index of the active medium, characterised in that the active medium is arranged after the compensating medium which serves as a pre-compensator.

The effective non-linear refractive index component of the device is operating condition dependent and the respective refractive index components of the media may be tailored to partially or wholly cancel each other at a particular operating condition of the optical device. Generally, the operating condition defines the phase mismatch between fundamental and second harmonic waves in the compensating medium, which in turn sets the amount of compensation through the value of the intensity dependent refractive index component of the compensating medium.

The active medium may be a gain medium. In some embodiments of the invention, the optical device is an optical amplifier.

The compensating medium may be periodically poled.

The compensating and active media may be optical fiber or solid state media.

According to a further aspect of the invention there is provided an optical amplifier unit for amplifying an optical signal, comprising:

a gain medium , for non-linear amplification of the optical signal, with an intensity dependent positive non-linear refractive index; and
a compensating medium with a negative effective non-linear refractive index which is also intensity dependent and has a magnitude sufficient to compensate for signal distortion in the gain medium during the non-linear optical amplification,

characterised in that the gain medium is arranged after the compensating medium which serves as a pre-compensator.

The high intensity optical pulses may cause increase of refractive index of an optical amplifier

The pulse intensity may be between $1W/cm^2$ and $10^{12}$ $W/cm^2$.

The non-linearity of the optical amplifier may be Kerr non-linearity.

The optical amplifier may be a fiber amplifier, for example based on a silica fiber. Alternatively, the optical amplifier may be a planar amplifier, for example based on LiNbO$_3$ or a silica planar amplifier.

If a fiber amplifier is used, the fiber may be doped in various ways, for example doped with Er, Nd, Pr, Yb, Tm, Ho; co-doped with Er/Yb; and/or doped with germanium, phosphorous, boron, aluminum or fluoride.

The fiber of any such fiber amplifier may be periodically poled fiber with effective second order non-linearity greater than 0.01 pm/V. The periodically poled fiber may be doped with Er, Nd, Pr. Yb, Tm, Ho.

In the case of a planar amplifier, this may be a LiNbO$_3$ planar amplifier that is periodically poled.

The amplifier gain may be less than 1. The amplifier length may be between 1mm and 1 km. or between 1 km and 100 km.

## BRIEF DESCRIPTION OF THE DRAWINGS

For a better understanding of the invention and to show how the same may be carried into effect reference is now made by way of example to the accompanying drawings in which:

Figure 1A shows pulse intensity as a function of time in arbitrary units for an optical pulse;

Figure 1B shows, for the pulse of Figure 1A, pulse instantaneous frequency as a function of time in arbitrary units;

Figure 2 shows the variation of second harmonic power (SHP) generated in a crystal as a function of temperature of the crystal;

Figure 3 shows a first embodiment of the invention which comprises and optical amplifier with a non-linearity pre-compensator;

Figure 4A is a spectrum of a pulse received at the input of an EDFA;

Figure 4B is a spectrum of a pulse transmitted from the output of the EDFA without non-linearity compensation (prior art performance);

Figure 4C is a spectrum of a pulse transmitted from the output of the EDFA with non-linearity compensation (performance of first embodiment);

Figure 5 shows a second embodiment of the invention including an attenuator arranged between the non-linearity pro-compensator and the optical amplifier;

## DETAILED DESCRIPTION

Principles of the Invention

As stated above, the invention is based on exploiting a second order cascading non-linearity. The cascading effect arises when the phase-matched condition is not satisfied, i.e. $\Delta \mathbf{k} = \mathbf{k_{2\omega}} - 2\mathbf{k_\omega} \neq 0$. In this circumstances, the second harmonic (SH) field propagates with a phase velocity ($c_0/n_{2\omega}$) different from the phase velocity of the nonlinear polarization that drives it and from that of the fundamental beam ($c_0/n_\omega$). This results in a periodic exchange of power between the two propagating fields, with half a period defined as "coherence length" ($1_c$).

An "up-conversion" ($\omega \rightarrow 2\omega$) over a coherence length follows a "downconversion" ($2\omega \rightarrow \omega$), that justifies the name "cascading" given to this phenomenon. After a coherence length, the accumulated phase difference between the fields is such that the energy flow changes sign and the double-frequency field begins to transfer energy to the fundamental. But now the down-converted field has a different phase with the non-converted one and this results in a phase shift of the fundamental wave (as well as of the generated field).

For low SHG conversion efficiency the resulting interaction is similar to the classical Kerr-effect but with an effective nonlinear refractive index $n_2^{\mathrm{eff}}$ which depends on the quadratic nonlinear coefficient, and on $\Delta kL$ where $\Delta k$ is the wave-vector mismatch and can be expressed in the form

$$n_2^{\mathrm{eff}} = -\frac{4\pi}{c\varepsilon_0} \frac{L}{\lambda} \frac{d_{\mathrm{eff}}^2}{n_{2\omega}n_\omega^2} \frac{1}{\Delta kL}, \tag{11}$$

where $d_{eff}$ is the quadratic nonlinear coefficient.

The practical significance of equation (11) is that $\Delta k$, the wave-vector mismatch, can be controllably set or varied to provide any desired effective nonlinear refractive index $n_2^{eff}$, positive or negative, within a certain tuning range. The sign of the effective refractive index is changed by changing the sign of the phase mismatch. The essence of the present invention is utilization of the cascaded non-linearity in such a way that effective nonlinear refractive index given by equation (11) is of negative sign and a magnitude set to equal the real refractive index associated with the self-phased modulation caused by the Kerr non-linearity, or any other non-linear effect that scales proportional to light intensity. A compensator is thus provided which contains an optical transmission medium with a significant quadratic non-linear coefficient $d_{eff}$ in which the size of the cascaded non-linearity is set to cancel out the SPM from the Kerr non-linearity.

In this respect, it is noted that the other parameters of equation (11) are essentially constants for any given system. (For wavelength division multiplexed (WDM) systems, the multiple operating wavelengths will lie within a relatively narrow band $\Delta\lambda$, giving a range of $n_2^{eff}$ values. This range will however be relatively small since $\Delta\lambda/\lambda$ will typically be large).

First Embodiment

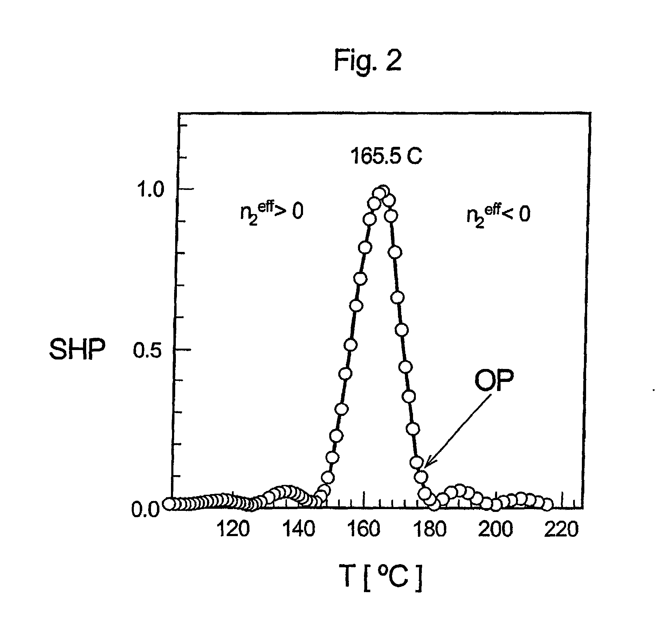

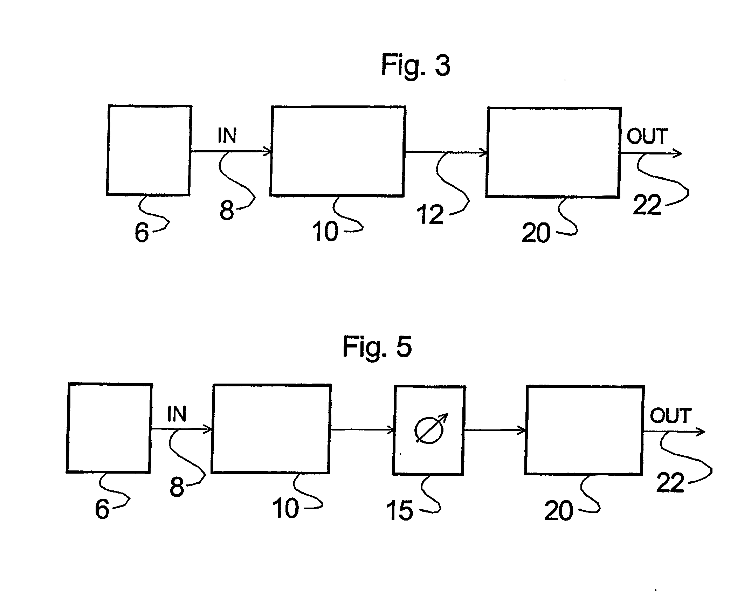

A first embodiment of the invention is now described with reference to Figures 2 and 3.

Figure 2 is experimental data showing second harmonic power as a function of temperature for a 4 mm long periodically poled bulk lithium niobate (LiNbO$_3$) crystal (PPLN) with 18.3 μm pitch. The tuning curve of the crystal shown in Figure 2, indicates that at temperatures higher than 165° C there should be a negative effective nonlinear refractive index $n_2^{eff}$, with positive values occurring below that temperature.

Figure 3 shows a first embodiment of the invention built to prove the operational principles experimentally. The apparatus shown comprises a light source 6 in the form of a passively mode-locked fiber laser connected to a non-linearity pre-compensator 10 in the form of the above-mentioned 4mm long PPLN crystal with 18.3 μm pitch. The pre-compensator 10 has an input line 8 connected to the light source 6 and an output line 12 connected to an input of an optical amplifier 20 in the form of a 2 m long erbium doped fiber amplifier (EDFA), the output of which is supplied to an output line 22 for further transmission, for example to a long haul transmission fiber.

The apparatus of Figure 3 was tested by supplying a train of picosecond pulses from the passively mode-locked fiber laser 6. The 1.2 ps bandwidth limited pulses were amplified in the EDFA 20.

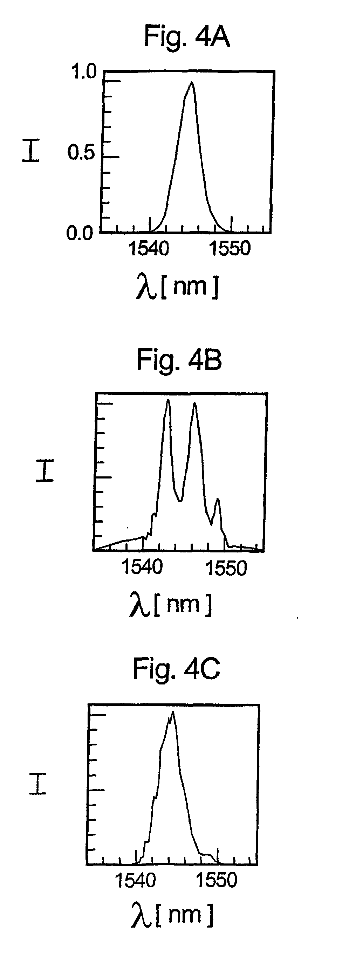

Figure 4A shows the input pulse shape as measured at the input 8. The input pulses have a clean 2.3 nm wide spectrum.

Figure 4B shows the output pulse shape at line 22 with a prior-art-like set-up in which the non-linearity pre-compensator 10 was removed (set-up not shown). In other words, the input pulses are supplied directly to the optical amplifier 20. As expected, direct amplification of the picosecond pulses in the optical amplifier 20 results in significant spectral broadening of the amplified pulses due to self-phase modulation with maximum phase shift $\sim 2.5\ \pi$. Peak power of the pulses at the output of the amplifier was about 1 kW and the amplifier gain was 15 dB.

Figure 4C shows the output pulse shape at line 22 with the set up of Figure 3, namely where, prior to amplification, the pulses pass through the PPLN 10 which is maintained at a temperature somewhat 10 °C higher than that corresponding to the phase matched condition. This operating point (OP) is indicated in Figure 2 with an arrow. Figure 4C shows that the spectrum of the output pulses is almost identical to that of the input pulses shown in Figure 4A, clearly indicating an effective non-linearity-free operation.

Thus our experiment has clearly demonstrated what we believe to be the first ever Kerr-non-linearity free EDFA.

The range of potential uses of such amplifiers is very wide and includes telecommunication systems and power amplifiers for generating high intensity pulses for non-linear applications.

It should be understood that the use of this technique is not limited to PPLN. Any material with $d_{eff}$ more than about 0.001 pm/V would perform compensation action of a practical amount for typical applications.

In particular, periodically poled optical fibers are most attractive due to possibility to combine both amplification and compensation actions in a single fiber device.

It should be also understood that both actions, compensation and amplification can be executed within the same amplifier device. Indeed, the gain and compensation medium may be the same medium, for example a periodically polled optical fiber with rare earth doping for gain.

Further Embodiments

Figure 5 illustrates a second embodiment of the invention. The second embodiment differs from the first embodiment through the addition of an attenuator 15 arranged between the pre-compensator 10 and optical amplifier 20. The inclusion of an attenuator with an attenuation factor M allows a shorter length of compensating material to be used, since the intensity of the light passing through the pre-compensator will be M times larger than that traversing the optical amplifier.

This is useful since, generally, the ratio between effective nonlinear refractive index $n_2^{eff}$ and the relevant component of the real refractive index of the optical amplifier material (typically silica) will be about 1000. That is for every 1 meter of length of optical amplifier fiber, approximately 1 millimeter of path length in the compensator material will be needed to cancel the Kerr non-linearity. (Assuming only one pass of the compensator material, path length will equal actual length of the compensator material). However, with the attenuator, only 1/M millimeters of compensator length would be needed in the comparable situation to cancel the Kerr non-linearity.

The pre-compensator can be used as a passive or active component at any point in a transmission system where Kerr non-linearity, or other functionally similar non-linear effects, need to be compensated for.

In the above it has been implicitly assumed that the pre-compensator will be a passive device. However, the temperature sensitivity of the cascade effect renders it suitable for active control, optionally with feedback. As a passive compensator, the device will be temperature stabilized. This will not present any additional burden for many applications where strict temperature stabilization is already needed for stable operation of other devices such as semiconductor lasers. In an active compensator, a conventional temperature controller can be used. It will also be understood that the effect is tunable with parameters other than temperature, for example by applying stress to the compensating medium. The size of the stress can be controlled by conventional apparatus. In the case of a solid state compensator this may be with an external pressure cell. In the case of an optical fiber compensator this may be with an expandable core in an optical fiber coil, as used in fiber sensor technology.

Without feedback, temperature control can be used to switch the compensator between different levels of compensation (including zero compensation. i.e. at the peak of the operating curve shown in Figure 2).

With feedback, temperature control can be used to tune the compensator for optimum cancellation of the non-linear effects occurring elsewhere in the transmission system. Training data, for example the bit error rate in training data, may be used to provide the necessary feedback, thereby automatically accounting for non-linearities over the whole transmission line. Standard PID temperature controllers may be used for example.

References

1. S.Kawai, H.Masuda, K.-I. Suzuki, K. Aida OFC'98, San-Jose, USA, Paper TuG3
2. S.T.Hwang, J.Nilsson, S.Y.Yoon, S.J.Kim, OFC'98, San-Jose, USA, Paper WG3
3. G.P. Agrawal, Nonlinear Fiber Optics, Academic Press, 1995
4. D. Taverner, D.J. Richardson, L. Dong, J. Caplen, K. Williams and R. V. Penty, Opt. Lett., **22,** 378, (1997)
5. M. E. Fermann, Opt. Lett., **23,** 52, (1998)
6. P. Vidakovic et al, Optics Letters 22, 277 (1997)
7. C. Paré, A. Villeneuve, P. -A. Bélanger and N.J.Doran, Opt. Lett., **21,** 459, (1996).
8. C Paré, A. Villeneuve, S LaRochelle, Opt. Comm., **160,** 130, (1999)

**Claims**

**1.** A method of compensating an optical non-linearity comprising:

(a) providing an optical signal;
(b) precompensating the optical signal for subsequent non-linear distortion in an active medium (20) with a compensating medium (10) which has a negative effective non-linear refractive index; and
(c) supplying the optical signal to the active medium (20) with an intensity dependent positive non-linear refractive index.

**2.** A method according to claim 1, further comprising attenuating the optical signal after precompensating it and before supplying it to the active medium.

**3.** A method according to claim 1 or 2, wherein the active medium is a gain medium.

**4.** A method of amplifying an optical signal comprising:

(a) providing an optical signal pulse having an input intensity;

(b) amplifying the optical signal pulse in a gain medium (20) having an intensity dependent positive non-linear refractive index and which has a non-linear response at the input intensity, thereby to amplify the optical signal pulse; and

(c) compensating the optical signal pulse for distortion in the gain medium with a compensating medium (10) which has a negative effective non-linear refractive index,

**characterised in that** the compensating occurs before the amplifying.

5. A method according to any one of the preceding claims, wherein the negative effective non-linear refractive index is defined by a phase mismatch between fundamental and second harmonic waves in the compensating medium.

6. An optical device having an active medium (20) with an intensity dependent positive non-linear refractive index and a compensating medium (10) with a negative effective non-linear refractive index which is also intensity dependent, **characterised in that** the active medium is arranged after the compensating medium which serves as a pre-compensator.

7. An optical device according to claim 6, further comprising an attenuator (15) arranged between the compensating medium and the active medium.

8. An optical device according to claim 6 comprising a controller for controlling the compensating medium so as to satisfy an operating condition at which the negative effective non-linear refractive index of the compensating medium partially or wholly cancels the positive non-linear refractive index of the active medium.

9. An optical device according to claim 8, wherein the operating condition is controlled by adjusting a stress condition of the compensating medium.

10. An optical device according to claim 8 wherein the operating condition is controlled by adjusting an operating temperature of the compensating medium.

11. An optical device according to any one of claims 6 to 10, wherein the active medium is a gain medium.

12. An optical amplifier unit for amplifying an optical signal, comprising:

a gain medium (20), for non-linear amplification of the optical signal, with an intensity dependent positive non-linear refractive index; and

a compensating medium (10) with a negative effective non-linear refractive index which is also intensity dependent and has a magnitude sufficient to compensate for signal distortion in the gain medium during the non-linear optical amplification,

**characterised in that** the gain medium is arranged after the compensating medium which serves as a pre-compensator.

13. An optical device or optical amplifier unit according to any one of claims 6 to 12, wherein the effective non-linear refractive index is defined by a phase mismatch between fundamental and second harmonic waves in the compensating medium.

14. An optical device or optical amplifier unit according to any one of claims 6 to 13, wherein the compensating medium is periodically poled.

15. An optical device or optical amplifier unit according to any one of claims 6 to 14, wherein the compensating medium is an optical fiber.

16. An optical device or optical amplifier unit according to any one of claims 6 to 15, wherein the active medium is an optical fiber.

**Patentansprüche**

1. Verfahren zum Kompensieren einer optischen Nicht-Linearität mit:

(a) Schaffen eines optischen Signals;
(b) Vorkompensieren des optischen Signals für die nachfolgende, nicht-lineare Verzerrung in einem aktiven Medium (20) mit einem Kompensiermedium (10), welches einen negativen, effektiven, nicht-linearen Brechungsindex hat; und
(c) Zuführen des optischen Signals zu dem aktiven Medium (20) mit einem intensitätsabhängigen, positiven, nicht-linearen Brechungsindex.

2. Verfahren nach Anspruch 1, ferner mit dem Dämpfen des optischen Signals nach dem Vorkompensieren desselben und vor dem Zuführen desselben zu dem aktiven Medium.

3. Verfahren nach Anspruch 1 oder 2, wobei das aktive Medium ein Verstärkungsmedium ist.

4. Verfahren zum Verstärken eines optischen Signals mit:

(a) Schaffen eines optischen Signalimpulses mit einer Eingangsintensität;
(b) Verstärken des optischen Signalimpulses in einem Verstärkungsmedium (20) mit einem intensitätsabhängigen, positiven, nicht-linearen Brechungsindex, wobei das Medium ein nicht-lineares Verhalten bei der Eingangsintensität hat, um dadurch den optischen Signalimpuls zu verstärken; und
(c) Kompensieren des optischen Signalimpulses für ein Verzerren in dem Verstärkungsmedium mit einem Kompensiermedium (10), das einen negativen, effektiven, nicht-linearen Brechungsindex hat,

**dadurch gekennzeichnet, daß** das Kompensieren vor dem Verstärken erfolgt.

5. Verfahren nach einem der vorhergehenden Ansprüche, wobei der negative, effektive, nicht-lineare Brechungsindex durch eine Phasenfehlanpassung zwischen der ersten und zweiten harmonischen Welle in dem Kompensiermedium gebildet wird.

6. Optische Vorrichtung mit einem aktiven Medium (20) mit einem intensitätsabhängigen, positiven, nicht-linearen Brechungsindex und einem Kompensiermedium (10) mit einem negativen, effektiven, nicht-linearen Brechungsindex, der auch intensitätsabhängig ist,
**dadurch gekennzeichnet, daß** das aktive Medium hinter dem Kompensiermedium angeordnet ist, welches als Vorkompensator dient.

7. Optische Vorrichtung nach Anspruch 6, ferner mit einem Dämpfungsglied (15), welches zwischen dem Kompensiermedium und dem aktiven Medium angeordnet ist.

8. Optische Vorrichtung nach Anspruch 6, mit einer Steuereinrichtung zum Steuern des Kompensiermediums, um einer Betriebsbedingung zu genügen, bei welcher der negative, effektive, nicht-lineare Brechungsindex des Kompensiermediums teilweise oder ganz den positiven, nicht-linearen Brechungsindex des aktiven Mediums aufhebt.

9. Optische Vorrichtung nach Anspruch 8, wobei die Betriebsbedingung durch Einstellen einer Belastungsbedingung des Kompensiermediums gesteuert wird.

10. Optische Vorrichtung nach Anspruch 8, wobei die Betriebsbedingung durch Einstellen einer Betriebstemperatur des Kompensiermediums gesteuert wird.

11. Optische Vorrichtung nach einem der Ansprüche 6 bis 10, wobei das aktive Medium ein Verstärkungsmedium ist.

12. Optische Verstärkereinheit zum Verstärken eines optischen Signals, mit:

einem Verstärkungsmedium (20) für eine nicht-lineare Verstärkung des optischen Signals und mit einem intensitätsabhängigen, positiven, nicht-linearen Brechungsindex; und
einem Kompensiermedium (10) mit einem negativen, effektiven, nicht-linearen Brechungsindex, der auch intensitätsabhängig ist und eine Größe hat, die ausreicht, um die Signalverzerrung in dem Verstärkungsmedium während der nicht-linearen, optischen Verstärkung zu kompensieren,

**dadurch gekennzeichnet, daß** das Verstärkungsmedium hinter dem Kompensiermedium angeordnet ist, welches als Vorkompensator dient.

13. Optische Vorrichtung oder optische Verstärkungseinheit nach einem der Ansprüche 6 bis 12, wobei der effektive, nicht-lineare Brechungsindex durch Phasenfehlanpassung zwischen ersten und zweiten harmonischen Wellen in dem Kompensiermedium bestimmt wird.

14. Optische Vorrichtung oder optische Verstärkungseinheit nach einem der Ansprüche 6 bis 13, wobei das Kompensiermedium periodisch gepolt wird.

15. Optische Vorrichtung oder optische Verstärkungseinheit nach einem der Ansprüche 6 bis 14, wobei das Kompensiermedium eine Lichtleitfaser ist.

16. Optische Vorrichtung oder optische Verstärkungseinheit nach einem der Ansprüche 6 bis 15, wobei das aktive Medium eine Lichtleitfaser ist.

**Revendications**

1. Procédé de compensation d'une non-linéarité optique comprenant :

    (a) la production d'un signal optique ;
    (b) une précompensation du signal optique pour une distorsion non linéaire subséquente dans un milieu actif (20) avec un milieu de compensation (10) qui a un indice de réfraction non linéaire effectif négatif ; et
    (c) l'application du signal optique au milieu actif (20) avec une intensité qui dépend d'un indice de réfraction non linéaire positif.

2. Procédé selon la revendication 1, comprenant en outre l'atténuation du signal optique après sa précompensation et avant son application au milieu actif.

3. Procédé selon la revendication 1 ou 2, dans lequel le milieu actif est un milieu à gain.

4. Procédé d'amplification d'un signal optique, comprenant :

    (a) la production d'une impulsion de signal optique ayant une intensité d'entrée ;
    (b) l'amplification de l'impulsion du signal optique dans un milieu à gain (20) ayant un indice de réfraction non linéaire positif dépendant de l'intensité et qui a une réponse non linéaire à l'intensité d'entrée, amplifiant ainsi l'impulsion du signal optique ; et
    (c) la compensation de l'impulsion du signal optique pour une distorsion dans le milieu à gain avec un milieu de compensation (10) qui a un indice de réfraction non linéaire effectif négatif, **caractérisé en ce que** la compensation a lieu avant l'amplification.

5. Procédé selon l'une quelconque des revendications précédentes, dans lequel l'indice de réfraction non linéaire effectif négatif est défini par une désadaptation de phase entre des ondes d'une fondamentale et d'un deuxième harmonique dans le milieu de compensation.

6. Dispositif optique ayant un milieu actif (20) présentant un indice de réfraction non linéaire positif dépendant de l'intensité et un milieu de compensation (10) ayant un indice de réfraction non linéaire effectif négatif qui est également dépendant de l'intensité, **caractérisé en ce que** le milieu actif est agencé après le milieu de compensation qui sert de précompensateur.

7. Dispositif optique selon la revendication 6, comportant en outre un atténuateur (15) agencé entre le milieu de compensation et le milieu actif.

8. Dispositif optique selon la revendication 6, comportant un dispositif de commande destiné à commander le milieu de compensation afin de satisfaire à une condition de fonctionnement selon laquelle l'indice de réfraction non linéaire effectif négatif du milieu de compensation annule partiellement ou totalement l'indice de réfraction non linéaire positif du milieu actif.

9. Dispositif optique selon la revendication 8, dans lequel la condition de fonctionnement est commandée par un réglage d'une condition de contrainte du milieu de compensation.

10. Dispositif optique selon la revendication 8, dans lequel la condition de fonctionnement est commandée par un réglage d'une température de fonctionnement du milieu de compensation.

11. Dispositif optique selon l'une quelconque des revendications 6 à 10, dans lequel le milieu actif est un milieu à gain.

12. Unité à amplificateur optique destinée à amplifier un signal optique, comportant :

un milieu à gain (20) pour une amplification non linéaire du signal optique, ayant un indice de réfraction non linéaire positif dépendant de l'intensité ; et
un milieu (10) de compensation ayant un indice de réfraction non linéaire effectif négatif qui est également dépendant de l'intensité et a une amplitude suffisante pour compenser une distorsion du signal dans le milieu à gain pendant l'amplification optique non linéaire, **caractérisée en ce que** le milieu à gain est agencé après le milieu de compensation qui sert de précompensateur.

13. Dispositif optique ou unité à amplificateur optique selon l'une quelconque des revendications 6 à 12, dans lequel l'indice de réfraction non linéaire effectif est défini par une désadaptation de phase entre des ondes d'une fondamentale et d'un deuxième harmonique dans le milieu de compensation.

14. Dispositif optique ou unité à amplificateur optique selon l'une quelconque des revendications 6 à 13, dans lequel le milieu de compensation est polarisé périodiquement.

15. Dispositif optique ou unité à amplificateur optique selon l'une quelconque des revendications 6 à 14, dans lequel le milieu de compensation est une fibre optique.

16. Dispositif optique ou unité à amplificateur optique selon l'une quelconque des revendications 6 à 15, dans lequel le milieu actif est une fibre optique.

## Fig. 1A

## Fig. 1B

Fig. 2

## Fig. 3

## Fig. 5

## Fig. 4A

## Fig. 4B

## Fig. 4C